# EUROPÄISCHE PATENTANMELDUNG

(11) **EP 1 104 071 A2**
(43) Veröffentlichungstag der Anmeldung: **30.05.2001**
(21) Anmeldenummer: 00125095.0
(22) Anmeldetag: 17.11.2000
(51) Int. Cl.: H02H 6/00

(54) **Schaltungsanordnung zur Überwachung eines elektrischen Betriebsmittels**

(30) Priorität: 25.11.1999 DE 19956657
(71) Anmelder: Moeller GmbH, 53115 Bonn (DE)
(72) Erfinder: Gabriel, Rupprecht, 33813 Oerlinghausen (DE)

(57) **Zusammenfassung**

Die Erfindung betrifft eine Schaltungsanordnung zum Überwachung von Betriebsmitteln (M) mit einer Baugruppe (100) zum Schutz des Betriebsmittels. Ein zentraler Rechenbaustein (CPU) wird von einer ersten Spannungsquelle (Sp1) versorgt. Ein Element (R1) zur Erfassung eines Ausfalls der ersten Spannungsquelle (Sp1) ist vorhanden. In einem Bauelement (mPr) ist die Abkühlzeit des Betriebsmittels (M) nachgebildet und es ist ein Element (R) vorhanden, das ein Wiedereinschalten des Betriebsmittels (M) nach Ausfall der ersten Spannungsquelle (Sp1) während der Abkühlzeit sperrt. Es wird vorgeschlagen, dass in den Festwertspeicher eines Rechenbausteins (mPr) die Abkühlzeit eingeschrieben ist und der Rechenbaustein (mPr) von einer zweiten, unabhängigen Spannungsquelle (Sp2) versorgt wird, und dass ein Ausfall der ersten Spannungsquelle (Sp1) erkannt wird, wobei die zweite Spannungsquelle (Sp2) für die Fortsetzung der
Betriebsfunktionen ausreichend dimensioniert ist.

## Beschreibung

Die Erfindung betrifft eine Schaltungsanordnung zum Betrieb und der Überwachung eines elektrischen Betriebsmittels, wie Motoren oder Transformatoren.

Zu den Aufgaben einer solchen Schaltungsanordnung gehört neben der Steuerung und/oder Überwachung der Betriebszustände des Betriebsmittels auch die Überwachung gegen unzulässig hohe Betriebsbelastungen. Ein wichtige Aufgabe besteht darin, im Falle des Ausfalls der Spannungsversorgung, insbesondere der Netzspannung (beispielsweise durch Auslösung eines Schutzschalters) das Wiedereinschalten des Betriebsmittels so zu gestalten, daß das Betriebsmitteln nicht überlastet wird. Das Problem liegt darin, daß das Betriebsmitteln nach einer kurzer Ausschaltdauer noch eine erhöhte Betriebstemperatur hat und daher die Netzspannung nicht mit vollem Nennstrom zugeschaltet werden darf.

Bei der Inbetriebnahme von Motoren oder Transformatoren sind die Einschaltbedingungen von der thermischen Situation des Betriebsmittels abhängig, insbesondere ist die Zeit und die Intensität der Abkühlung von Bedeutung, die seit dem Abschalten verstrichen ist. Von dem Verlauf der Abkühlungskurve hängt der Zeitpunkt des Wiedereinschaltens und/oder die zulässige Höhe des Einschaltstroms ab. Dieser Sachverhalt ist besonders dann entscheidend, wenn das Betriebsmittel durch unzulässige Betriebsbedingungen (beispielsweise durch kurzzeitige Überspannung) automatisch abgeschaltet wurde und möglichst kurzfristig wieder eingeschaltet werden soll.

Es ist eine analoge Schaltungsanordnung zum Schutz von Leistungsschaltern bekannt. In dem Aufsatz von Czinczoll, J; Weber, Chr. in der Zeitschrift Elektropraktiker, Berlin 39 (1985) 224-226 wird ein RC-Netzwerk erwähnt, mit dem ein thermisches Abbild des Betriebsmittels dargestellt wird. Mit dieser Schaltungsanordnung wird ein sperrendes Schaltmittel, beispielsweise ein Relais beaufschlagt, wodurch ein Wiedereinschalten solange gesperrt bleibt, wie die Temperatur des Betriebsmittels noch oberhalb eines unzulässigen Wertes liegt, wobei eine Wiedereinschaltsperre auf eine Zeit bis zu 1 s wirksam ist.

Andere Verfahren bestehen darin, dass eine das thermische Abbild darstellende Zeitkonstante durch einen großen Kondensator und einen großen Widerstand nachgebildet wird.

Der Nachteil solcher Schaltungsanordnungen liegt darin, daß sehr lange Zeitkonstanten nur sehr schlecht reproduzierbar sind und mit guter Genauigkeit nachgebildet werden können. So belaufen sich Wiedereinschaltzeiten nach Überlastauslösung bei schweranlaufenden Motor-Zentrifugen-Anordnungen in der höchsten Auslöseklasse auf 12 Minuten. Die hierfür erforderlichen großen Kondensatoren haben eine schlechte Langzeitstabilität und sehr große Widerstände im Bereich vieler Megohm sind kritisch in der Langzeitstabilität. Die Eingangswiderstände der elektronischen Auswerteschaltung haben zudem bei den zu erreichenden Zeitkonstanten im Bereich von vielen Minuten einen nicht unerheblichen Einfluß auf die Genauigkeit der Schaltung. Auch kann man nur mit großem Aufwand unterschiedliche Betriebsmittel, beispielsweise verschiedene Klassen von Motoren in ihrem thermischen Verhalten genügend genau nachbilden.

Es ist Aufgabe der Erfindung, eine Schaltungsanordnung zum Schutz elektrischer Betriebsmittel anzugeben, die bei Ausfall der Spannungsversorgung insbesondere für große Zeitkonstanten bzw. für lange Abkühlzeiten ein realistisches thermisches Abbild für Abkühlzeiten liefert und die Fortsetzung der Betriebsfunktionen gesichert ist.

Die Lösung wird im Hauptanspruch formuliert. Weitergehende Ausgestaltungen sind in den Unteransprüchen zu finden.

Der Kern der Erfindung liegt darin, daß die Baugruppe der Schaltungsanordnung ein elektronisches Bauelement als Rechenbaustein umfaßt, insbesondere einen Microcontroller, in dessen Festwertspeicher die Abkühlzeit des Betriebsmittels als digitale Größe eingeschrieben ist und der Rechenbaustein von einer zweiten Spannungsquelle versorgt wird, die von der ersten Spannungsquelle unabhängig ist, dass ein Ausfall der ersten Spannungsquelle vom Rechenbaustein erkannt wird, dass ein Wiedereinschalten der Spannungsverorgung für das Betriebsmittels über die erste Spannungsquelle nach dem Spannungsausfall für die Dauer der Abkühlzeit gesperrt ist (Wiedereinschaltsperre) und die Kapazität der zweiten Spannungsquelle so bemessen ist, daß die Schaltungsanordnung für das Mehrfache der Abkühlzeit funktionstüchtig bleibt und den Betrieb und die Überwachung des Betriebsmittels vornehmen kann.

Im speziellen Fall sollte die zweite Spannungsquelle bis um den Faktor 10 in Bezug auf eine mögliche Abkühlzeit dimensioniert sein. Das kann bedeuten, daß bei einer Abkühlzeit von 12 Minuten eine Stromversorgung von 2,5 h (und damit sowohl die Sperr- als auch die Wiedereinschaltfunktion) sichergestellt wird.

Mit dieser Maßnahme lassen sich auch langzeitliche Veränderungen in den Bauelementen der Schaltungsanordnung und im Betriebsmittel berücksichtigen, die durch Alterung und Umwelteinflüsse (Temperatureffekte) bewirkt werden. Damit ist eine Sicherheitsmarge vorhanden, bei der auch bei ungünstigen Bedingungen der Weiterbetrieb weit über mögliche Abschaltzeiten hinausreicht.

Vorzugsweise sind im Festwertspeicher verschiedene Abkühlzeiten gespeichert, von denen eine bei der Konfiguration der Schaltungsanordnung dem jeweiligen Betriebsmittel zugeordnet wird. Damit erhält man mit der Schaltungsanordnung die Möglichkeit, die gewünschte Schutzfunktion flexibel auf das jeweils im Einsatz befindliche Betriebsmittel einzustellen, in der Regel ein Motor oder ein Transformator. Es sind auch Maßnahmen derart möglich, daß im Betriebsmittel und in der Baugruppe der Schaltungsanordnung korrespondierende Bauelemente vorhanden sind, mit denen die Wahl des Betriebsmittels automatisch zu einer Umschaltung auf die zugehörige Eigenschaft (hier also der Abkühlzeit) des Betriebsmittels führt; sogenannte intelligente Geräte-Erkennung nach dem Schlagwort 'Plug-and-Play'.

Schaltungsanordnungen für den hier vorgesehenen Zweck können mehr oder weniger komplex ausgestaltet sein. So kann zur Schaltungsanordnung beispielsweise gehören:
- Speicher für variable Einstellparameter,
- Lastüberwachung mittels Stromsensor oder Stromwandler (ein- oder mehrphasig),
- Fehler- oder Überstromschutz mit Auslöser für ein Schaltschloß eines Überstromschutzschalters,
- Messung, Speicherung (RAM) und Signalisierung (elektrisch, optisch, eventuell mit ac/dc-Konverter) von Betriebszuständen des Betriebsmittels (Strom, Leistung, Temperatur, Betriebsdauer u.s.w.),
- optische (Dioden und/oder LCD-Display) und/oder akustische Anzeigen der Betriebszustände, bzw. des zeitlich letzten Betriebszustands.

Der zentrale elektronische Baustein ist ein Mikroprozessor (CPU), der die möglichen Betriebsfunktionen der Schaltungsanordnungen und die Betriebszustände des Betriebsmittels steuert. Je nach Umfang der von der Schaltungsanordnungen abzuarbeitenden Aufgaben benötigen die Baugruppen, insbesondere der zentrale Mikroprozessor unterschiedlich hohe Leistungsaufnahmen.

Als besondere Ausgestaltungen werden noch folgende Weiterbildungen vorgeschlagen.

Die Umschaltung der Baugruppe der Schaltungsanordnung in eine Betriebsfunktion geringerer Stromaufnahme ist durch die Verminderung der Anzahl von Betriebsfunktionen realisierbar, so daß sich durch Verringerung der Zahl der Betriebsfunktionen die Verringerung der Stromaufnahme ergibt. In Besonderheit kann allein auf die Betriebsfunktion ,heruntergeschaltet' werden, in der nur der Schutz für unzulässige Wiedereinschaltzustände gewährleistet ist. Es können unterschiedliche ,Abschaltroutinen' vorgesehen sein, beispielsweise eine solche, bei der einer zeitlich unbefristeten Wiedereinschaltsperre nur die Sicherung von Zustandsdaten (sogenannte Rettungsroutine) vorgelagert ist.

Bei Motoren sind bestimmte Typ-Klassen definiert, in denen die Wiedereinschaltzeit nach Überlastauslösung festgelegt ist. Beispielsweise sind Motoren für den Zentrifugenantrieb schweranlaufende Motoren, die in einer hohen Typ-Klasse eingeordnet sind, in denen die Bereitschaftszeit zum Wiedereinschalten über 10 Minuten liegen kann. Solche Zeiten sollen jedoch nicht obere Grenze der vorgeschlagenen Anordnung sein.

Die Umschaltung in eine Betriebsfunktion geringerer Stromaufnahme kann durch die Verminderung der Clockfrequenz des zentralen Rechenbausteins realisiert werden. Mikroprozessoren verbrauchen bei verringerter Clockfrequenz weniger Strom. Beispielsweise können Schaltungsanordnungen mit Clockfrequenzen in der Größenordnung von 1 bis 10 MHz betrieben werden, wie sie bei marktgängigen Mikroprozessoren Standard sind. Eine Verminderung der Clockfrequenz kann so erfolgen, daß sie im Verhältnis 10:1 oder auch 100:1 reduziert wird. Die Stromaufnahme läßt sich damit sicher in einen Bereich von wenigen µA reduzieren.

Eine Betriebsfunktion, in der nach dem Ausfall der Netzspannung heruntergeschaltet wird, kann aus einer sogenannten Rettungsroutine bestehen, bei der die Zustands- und/oder Betriebsdaten zum Zeitpunkt des Netzspannungsausfalls in einen Speicher übertragen werden, so daß sie bei der Wiederinbetriebnahme zur Verfügung stehen und auf diesen Daten beim Wiedereinschalten automatisch aufgesetzt werden kann.

Die vorgegebene Abkühlzeit ist als Summe von Zähltakten vorgegeben, wobei der Mikroprozessor einen Vergleich mit einer gespeicherten Größen vornimmt. Nach Erreichen der Abkühlzeit wird die Wiedereinschaltbarkeit hergestellt.

Die Baugruppe ist als Bestandteil eines Schutzschalters für das Betriebsmittel ausgebildet und/oder in einen Schutzschalter integriert.

Der Rechenbaustein kann durch einen CMOS-Mikrocontroller gebildet sein.

Die zweite, netzunabhängige Spannungsquelle wird durch einen genügend großen Kondensator oder durch einen Akkumulator gebildet.

Tabellarische Übersicht zur Auswahl möglicher Betriebsfunktionen bei Auslösung (sogenannte Abschaltroutinen):

| | | |
|---|---|---|
| A | Normalbetrieb des Betriebsmittels | |
| B1 | Wiedereinschalten sperren für die Dauer der Abkühlzeit | |
| B2 | Wiedereinschalten sperren ohne Zeitbegrenzung (als letztmögliche | |
| | Rückfallposition) | |
| D1 | Clockfrequenz (CLF) reduzieren | zugeordnete Clockfrequenz |
| D2 | Abschaltung und Sperre signalisieren | CLF = c2 |
| D3 | Ladezustand der zweiten Spannungsquelle speichern | CLF = c3 |
| D4 | Temperatur: Erfassen und Abspeichern | CLF = c4 |
| D5 | Zeit: Erfassen und Abspeichern | CLF = c5 |
| D6 | Strom- oder Leistungsaufnahme: Erfassen und Abspeichern | CLF = c6 |
| D7 | Zustandsdaten über Display signalisieren | CLF = c7 |
| D8 | Nach Ablauf der Abkühlzeit die zweite Spannungsquelle abschalten | CLF = c8 |

Die tabellarisch dargestellten Abschaltroutinen geben Beispiele für mögliche Programmierungen der Schaltungsanordung an, die selbstverständlich von der Leistungsklasse des Betriebsmittels bestimmt sind. Die mit den Bezeichnungen D2 bis D8 aufgelisteten Betriebsfunktionen können auch in Kombination auftreten, wobei je nach Anwendungsfall nur zwei Betriebsfunktionen nebeneinander oder auch alle Betriebsfunktionen (beispielsweise D2 bis D7 nebeneinander) wählbar sind. Zu den Betriebsfunktionen ist jeweils eine Clockfrequenz des zentralen Rechenbausteins (in der rechten Spalte mit c2 bis c8 bezeichnet) zugeordnet.

Jede mögliche Kombination der Betriebsfunktionen für eine Abschaltroutine verlangt eine bestimmte Stromversorgung durch die zweite Spannungsquelle. Die vorgeschlagene Anordnung stellt sicher, daß bei Ausfall der ersten Spannungsquelle und Sperrung des Wiedereinschaltens auch während der längstmöglichen Abkühlzeit des Betriebsmittels eine sichere Stromversorgung vorhanden ist.

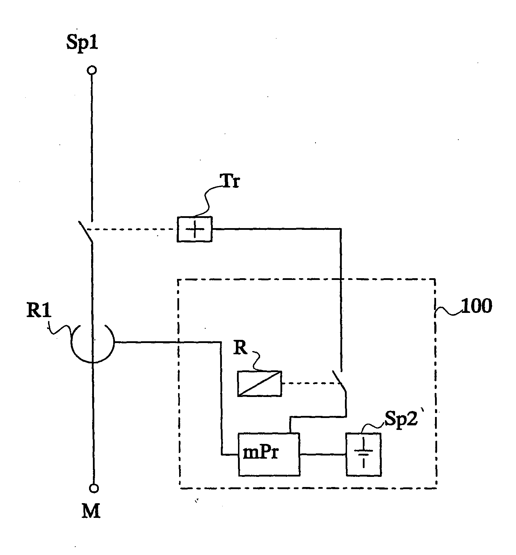

Ein Ausführungsbeispiel der Erfindung wird in einer einzigen Figuren dargestellt, die die Baugruppe 100 der Schaltungsanordnung als Blockschaltbild zeigt.

Ein Elektromotor (M) wird an Netzspannung (Sp1) betrieben. Das Vorhandensein der Netzspannung wird über einen Stromwandler (R1) (z.B. eine Rogowski-Spulen) überwacht. Der Betrieb des Elektromotors (M) wird über einen Motorschutzschalter (Tr) abgesichert. Die Schaltungsanordnung und damit die Baugruppe werden ebenfalls von der Netzspannung versorgt, die im Sinne der Erfindung als erste Spannungsquelle (Sp1) bezeichnet wird.

Die erfindungsgemäße Baugruppe (100) umfaßt einen vorzugsweise als Mikroprozessor ausgebildetes elektronisches Bauelement (mPr). Der Mikroprozessor kann Teil des zentralen Rechenbausteins (CPU) der Schaltungsanordnung sein. Weiterhin umfaßt die Baugruppe ein Relais (R), das ein Wiedereinschalten des Elektromotors (M) nach Ausfall der Netzspannung (Sp1 ) während der Abkühlzeit des Elektromotors (M) sperrt. Im Festwertspeicher des Mikroprozessors (mPr) ist die Abkühlzeit des Elektromotors (M) als digitale Größe abgespeichert. Der Mikroprozessor (mPr) wird von der zweiten, unabhängigen Spannungsquelle (Sp2), beispielsweise einer Batterie oder einem genügend groß ausgebildeten Kondensator versorgt.

Der Ausfall der Netzspannung (Sp1 ) wird vom Mikroprozessor (mPr) über das Meßsignal des Stromwandlers erkannt. Über den Mikroprozessor ist die Schaltungsanordnung in verschiedene Betriebsfunktionen umschaltbar. Der Wegfall der ersten Spannungsversorgung wird durch die die zweite Spannungsquelle (Sp2) kompensiert, so-dass die Energieversorgung erhalten bleibt. Ihre Kapazität ist so ausgelegt, daß sie für das Mehrfache der gespeicherten Abkühlzeit die Schaltungsanordnung versorgen kann. Zusätzlich kann eine Programmierung vorgenommen werden, daß nach Ausfall der ersten Spannungsquelle andere Betriebsfunktionen eingenommen werden. Diese Betriebsfunktionen haben vorzugsweise eine verringerte Stromaufnahme, so daß die Stromversorgung für alle ungünstigen Umstände sicher gestellt ist. Die Baugruppe kann auch so programmiert sein, dass nach Ablauf der Abkühlzeit eine Rückstellung (reset) der Betriebs- und Zustandsdaten auf die Startwerte des Elektromotors vorgenommen wird und die Versorgung durch die zweite Spannungsquelle nach Ablauf der Abkühlzeit abgeschaltet wird. Das Starten des Motors kann dann zu jeder späteren Zeit erfolgen, ohne dass eine Überlastung zu befürchten ist.

Die zweite Spannungsquelle (Sp2) kann eine Batterie oder ein Kondensator sein, die so verschaltet sind, dass sie nach Wiedereinschalten der Netzspannung von dieser wieder aufgeladen werden können. Diese Verschaltung ist nicht dargestellt, doch für den Fachmann unmittelbar angebbar.

## Patentansprüche

1. Schaltungsanordnung zum Betrieb eines von einer ersten Spannungsquelle (Sp1 ) versorgten elektrischen Betriebsmittels (M) und zur Überwachung von Betriebszuständen des Betriebsmittels (M),
**wobei** die Schaltungsanordnung umfaßt
eine Baugruppe (100) zum Schutz des Betriebsmittels (M) mit folgenden Elementen, bzw. Eigenschaften:
• mindestens ein Element (R1) zur Erfassung eines Ausfalls der ersten Spannungsquelle (Sp1),
• ein elektronisches Bauelement (mPr), in dem die Abkühlzeit des Betriebsmittels (M) nachgebildet ist,
• mindestens ein Element (R), das ein Wiedereinschalten der ersten Spannungsquelle (Sp1 ) nach ihrem Ausfall für die Dauer der Abkühlzeit sperrt,
• die Baugruppe (100) wird von einer zweiten Spannungsquelle (Sp2) versorgt, die von der ersten Spannungsquelle (Sp1) unabhängig ist
• und die Kapazität der zweiten Spannungsquelle (Sp2) ist so bemessen, daß die Schaltungsanordnung für das Mehrfache der Abkühlzeit den Betrieb und die Überwachung des Betriebsmittels (M) vornehmen kann.

2. Schaltungsanordnung nach Anspruch 1, **dadurch gekennzeichnet**, dass die Baugruppe (100) ebenfalls von einem, die Schaltungsanordnung zentral steuernden Rechenbaustein (CPU) gesteuert wird.

3. Schaltungsanordnung nach Anspruch 1 oder 2, **dadurch gekennzeichnet**, dass das elektronische Bauelement (mPr) Teil des zentral steuernden Rechenbausteins (CPU) ist.

4. Schaltungsanordnung nach einem der vorhergehenden Ansprüche, **dadurch gekennzeichnet**, dass bei Ausfall der ersten Spannungsquelle (Sp1 ) die Schaltungsanordnung in eine Betriebsfunktion verringerter Stromaufnahme umschaltbar ist.

5. Schaltungsanordnung nach Anspruch 4, **dadurch gekennzeichnet**, dass die Umschaltung in eine Betriebsfunktion verringerter Stromaufnahme durch die Verminderung der Clockfrequenz des elektronischen Bauelements (mPr) realisiert ist.

6. Schaltungsanordnung nach einem der vorhergehenden Ansprüche, **dadurch gekennzeichnet**, dass die nachgebildete Abkühlzeit als Summe von Zähltakten abgelegt ist.

7. Schaltungsanordnung nach einem der vorhergehenden Ansprüche, **dadurch gekennzeichnet**, dass im elektronischen Bauelement (mPr) mehrere Abkühlzeiten nachgebildet sind, von denen eine bei der Konfiguration der Schaltungsanordnung einem bestimmten Betriebsmittel (M) zuordbar ist.

8. Schaltungsanordnung nach einem der vorhergehenden Ansprüche, **dadurch gekennzeichnet**, dass eine Umschaltbarkeit der Schaltungsanordnung in eine solche Betriebsfunktion vorgesehen ist, in der für die Abkühlzeit das Wiedereinschalten des Betriebsmittels (M) gesperrt ist, anschließend die Schaltungsanordnung in eine Startkonfiguration gesetzt wird und danach die zweite Spannungsquelle (Sp2) abschaltet.

9. Schaltungsanordnung nach einem der vorhergehenden Ansprüche, **dadurch gekennzeichnet**, dass die Baugruppe (100) als Bestandteil eines Schutzschalters für das Betriebsmittel (M) ausgebildet und/oder in diesen integriert ist.

10. Schaltungsanordnung nach einem der vorhergehenden Ansprüche, **dadurch gekennzeichnet**, daß das elektronischen Bauelement (mPr) durch einen CMOS-Mikrocontroller gebildet wird.

11. Schaltungsanordnung nach einem der vorhergehenden Ansprüche, **dadurch gekennzeichnet**, daß die zweite Spannungsquelle (Sp2) durch einen Kondensator gebildet wird.
